# EUROPÄISCHE PATENTSCHRIFT

(11) **EP 3 205 444 B1**
(45) Veröffentlichungstag und Bekanntmachung des Hinweises auf die Patenterteilung: **23.01.2019**
(21) Anmeldenummer: 16197734.3
(22) Anmeldetag: 08.11.2016
(51) Int. Cl.: B23P 19/10, F01L 1/047, B23P 11/02

(54) **VORRICHTUNG ZUM POSITIONIEREN MEHRERER FUNKTIONSELEMENTE**
DEVICE FOR POSITIONING A PLURALITY OF FUNCTIONAL ELEMENTS
DISPOSITIF DE POSITIONNEMENT DE PLUSIEURS ÉLÉMENTS FONCTIONNELS

(43) Veröffentlichungstag der Anmeldung: 16.08.2017
(73) Patentinhaber: MAHLE International GmbH, 70376 Stuttgart (DE); Maschinenbau-Service- Automatisierungstechnik Chemnitz GmbH, 09116 Chemnitz (DE)
(72) Erfinder: MENONNA, Antonio, 71254 Ditzingen (DE); MORGENSTERN, Stefan, 09577 Niederwiesa (DE); SCHACHERER, Roland, 78187 Geisingen (DE)
(74) Vertreter: BRP Renaud & Partner mbB Rechtsanwälte Patentanwälte Steuerberater

(56) Entgegenhaltungen:
- WO-A1-2012/079656
- WO-A1-2014/111472
- DE-A1-102013 215 711
- DE-A1-102014 211 565
- JP-A- 2000 061 749
- JP-A- 2015 230 042

## Beschreibung

Die vorliegende Erfindung betrifft eine Vorrichtung zum Positionieren mehrerer, jeweils eine Ausnehmung für eine Welle aufweisender Funktionselemente auf der Welle, gemäß dem Oberbegriff des Anspruchs 1. Die Erfindung betrifft außerdem ein Verfahren zum thermischen Fügen von derartigen Funktionselementen auf einer solchen Welle unter Verwendung einer solchen Vorrichtung.

Zum Fügen von Funktionselementen, insbesondere von Nocken, auf einer Welle, insbesondere auf einem Nockenwellenrohr, müssen die Naben bzw. Ausnehmungen der einzelnen Funktionselemente zur Achse der Welle ausgerichtet werden. Sollen gleichzeitig mehrere Funktionselemente in einem Rutsch durch Einführen der Welle gefügt werden, müssen sämtliche Funktionselemente entsprechend ausgerichtet werden.

Aus der DE 10 2008 064 194 A1 ist eine hierfür geeignete Vorrichtung zur Positionierung mehrerer eine Ausnehmung für eine Welle aufweisender Funktionselemente, insbesondere Nocken, in einer vorbestimmten Winkelposition auf der Welle bekannt, wobei die Vorrichtung mehrere für jeweils ein Funktionselement bestimmte Aufnahmen aufweist. Die Aufnahmen sind dabei derart positionierbar, dass die Ausnehmungen der Funktionselemente im Wesentlichen auf einer gemeinsamen Geraden liegen.

Aus der JP 2000-61749 A ist eine weitere Vorrichtung zur Positionierung mehrerer eine Ausnehmung für eine Welle aufweisender Funktionselemente, insbesondere Nocken, auf der Welle bekannt.

Eine Vorrichtung nach dem Oberbegriff des Anspruchs 1 ist aus der WO 2014/111472 A1 bekannt.

Die vorliegende Erfindung beschäftigt sich mit dem Problem, eine Vorrichtung zur Positionierung mehrerer eine Ausnehmung für eine Welle aufweisender Funktionselemente anzugeben, die insbesondere einen Montagevorgang beim thermischen Fügen von Funktionselementen auf der Welle deutlich präziser gestaltet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer an sich bekannten Vorrichtung zum Positionieren mehrerer, jeweils eine Ausnehmung für eine Welle aufweisender Funktionselemente, beispielsweise Nocken, Ausgleichsmassen, Zahnräder und/oder Lager, in einer vorbestimmten Winkelposition auf der Welle, mehrere für jeweils ein Funktionselement bestimmte Haltebalkone vorzusehen, die übereinander angeordnet sind und die jeweils eine Greifeinrichtung zum Fixieren jeweils eines Funktionselementes besitzen, wobei diese Greifeinrichtungen jeweils an einem zugehörigen Greiferschlitten angeordnet sind und einen Freiheitsgrad in x-Richtung und y-Richtung, d.h. in einer vorzugsweise horizontalen Ebene, besitzen, wodurch ein Fügen mit der Welle erleichtert werden kann, da die einzelnen Funktionselemente zumindest geringfügig, insbesondere hinsichtlich eventueller Positionsungenauigkeiten, ausgelenkt werden können. Erfindungsgemäß ist darüber hinaus zumindest ein Greiferschlitten drehbar um eine z-Achse, d.h. um eine Hochachse, am Haltebalkon gelagert. Hierdurch ist es möglich, das jeweils in der zugehörigen Greifeinrichtung fixierte Funktionselement in einer nahezu beliebigen Drehwinkellage zu fixieren. Dabei kann beispielsweise an dem zugehörigen Haltebalkon eine kreissegmentartige Führungskontur vorgesehen sein, wobei ein Kreismittelpunkt der Führungskontur in einer Achse der Ausnehmung des zu fügenden Funktionselementes liegt, so dass ein Verfahren des Greiferschlittens in der Führungskontur ein Verdrehen des Funktionselements um dessen Achse bewirkt. Ein Verdrehen des Greiferschlittens führt somit nicht zu einem Ausweichen des jeweiligen Funktionselements aus seiner späteren Drehachse bzw. Fügeachse. Die Vorrichtung weist darüber hinaus einen verfahrbaren Führungsschlitten für die Welle auf, so dass die Welle insbesondere von oben durch die Ausnehmung der Funktionselemente einschiebbar ist, wobei der Einschiebevorgang aufgrund der in x-Richtung und y-Richtung bestehenden Freiheitsgrade der Greifeinrichtungen und damit auch der Funktionselemente deutlich vereinfacht werden kann. Erfindungsgemäß weist dabei jeder Haltebalkon jeweils eine Greifeinrichtung zum Fixieren jeweils eines Funktionselementes auf, wobei diese Greifeinrichtung an einem zugehörigen Greiferschlitten angeordnet und in x-Richtung und y-Richtung relativ zum zugehörigen Greiferschlitten und damit zum zugehörigen Haltebalkon verstellbar gelagert ist. Eine derartige Vorrichtung bietet den besonderen Vorteil, dass die einzelnen Funktionselemente auf den zugehörigen Haltebalkonen zunächst abgelegt und von der Greifeinrichtung fixiert werden können. In diesem Stadium ist bereits eine Vorausrichtung bezüglich einer Koaxialität der einzelnen Ausnehmungen der Funktionselemente erreicht. Die einzelnen Funktionselemente werden nun erwärmt oder sind bereits zuvor erwärmt worden, wobei zusätzlich oder alternativ die Welle gekühlt werden kann. Anschließend wird eine Zentrierstange von unten durch die Ausnehmung der einzelnen Funktionselemente geschoben, bis sie mit der Welle in Kontakt tritt, beispielsweise mittels einer Zentrierspitze, und dadurch die Welle für den Fügevorgang ausrichtet. Die Welle kann nun von oben mittels des verfahrbaren Führungsschlittens durch die Ausnehmung der Funktionselemente eingeschoben werden. Mit der erfindungsgemäßen Vorrichtung können somit mehrere, jeweils eine Ausnehmung für eine Welle aufweisende Funktionselemente, beispielsweise Nocken, Ausgleichsmassen, Zahnräder und/oder Lager, in einer vorbestimmten Winkelposition auf der Welle befestigt werden, beispielsweise durch thermisches Fügen.

Bei einer vorteilhaften Weiterbildung der Erfindung ist an zumindest einem Haltebalkon eine Schubeinrichtung, insbesondere an sämtlichen Haltebalkonen, vorgesehen, wobei die zumindest eine Schubeinrichtung derart ausgebildet ist, dass sie die Greifeinrichtung und darüber auch das Funktionselement zumindest in x-Richtung relativ zum Greiferschlitten verstellen kann. Hierdurch ist es möglich, die jeweiligen Funktionselemente nach dem Auffädeln auf die Welle mittels der jeweiligen Schubeinrichtung zumindest in x-Richtung gegen die Welle zu drücken und dadurch ein gleichmäßigeres Abkühlen der beim thermischen Fügen zuvor erhitzten Funktionselemente zu erreichen. Über die Schubeinrichtung kann die Greifeinrichtung zumindest in x-Richtung relativ zum Greiferschlitten verstellt werden. Die Welle kann dabei von oben mittels des verfahrbaren Führungsschlittens durch die Ausnehmung der Funktionselemente eingeschoben werden, wobei nach dem Einschieben die einzelnen Schubeinrichtungen die jeweiligen Greifeinrichtungen relativ zum zugehörigen Greiferschlitten zumindest in x-Richtung verschieben und dort fixieren, bis ein die Führungselemente auf der Welle fixierender Temperaturausgleich abgeschlossen ist. Durch das nachträgliche Verschieben der einzelnen Funktionselemente zumindest in x-Richtung kann ein besonders gleichmäßiges Abkühlen der zuvor erwärmten Funktionselemente auf der Welle erreicht werden.

Bei einer vorteilhaften Weiterbildung der erfindungsgemäßen Lösung ist die Greifeinrichtung um eine y-Achse, d.h. um eine horizontale Achse, kippbar am Greiferschlitten gelagert. Hierdurch wird eine Kippmöglichkeit für die Greifeinrichtung geschaffen, welche insbesondere eine Entnahme der fertiggestellten Steuerwelle aus der erfindungsgemäßen Vorrichtung erleichtert.

Zweckmäßig ist zumindest ein Greiferschlitten drehbar um eine z-Achse, d.h. um eine Hochachse, am Haltebalkon gelagert. Hierdurch ist es möglich, das jeweils in der zugehörigen Greifeinrichtung fixierte Funktionselement in einer nahezu beliebigen Drehwinkellage zu fixieren. Dabei kann beispielsweise an dem zugehörigen Haltebalkon eine kreissegmentartige Führungskontur vorgesehen sein, wobei ein Kreismittelpunkt der Führungskontur in einer Achse der Ausnehmung des zu fügenden Funktionselementes liegt, so dass ein Verfahren des Greiferschlittens in der Führungskontur ein Verdrehen des Funktionselements um dessen Achse bewirkt. Ein Verdrehen des Greiferschlittens führt somit nicht zu einem Ausweichen des jeweiligen Funktionselements aus seiner späteren Drehachse bzw. Fügeachse.

Bei einer weiteren vorteilhaften Ausführungsform der erfindungsgemäßen Lösung ist die Schubeinrichtung derart ausgebildet, dass sie die Greifeinrichtung ausschließlich in x-Richtung verschiebt. Selbstverständlich ist auch denkbar, dass die Schubeinrichtung die Greifeinrichtung zusätzlich in y-Richtung oder eine Schrägrichtung verstellen kann, wobei zur Vereinfachung der Konstruktion die Verstellbarkeit auf ausschließlich die x-Richtung beschränkt bleiben kann. Für die Schubeinrichtung kann beispielsweise ein Hydraulik- oder Pneumatikzylinder oder ein Exzenterelement vorgesehen sein, welches durch eine Drehbewegung eine Verschiebung der Greifeinrichtung bewirkt.

Bei einer weiteren vorteilhaften Ausführungsform der erfindungsgemäßen Lösung ist der Greiferschlitten relativ zum Haltebalkon in z-Richtung fixiert. Zusätzlich oder alternativ kann auch die Greifeinrichtung relativ zum Greiferschlitten in z-Richtung fixiert sein. Hierdurch kann erreicht werden, dass die jeweils mit der Welle zu fügenden Funktionselemente auf einer exakt vordefinierten axialen Position auf der Welle gefügt werden können, die durch die jeweilige Axialposition bzw. Höhenposition der einzelnen Haltebalkone vorgegeben ist. Sind somit die Haltebalkone hinsichtlich ihrer Höhe exakt eingestellt, kann hierdurch die axial richtige Position der Funktionselemente auf der Welle bestimmt werden, sofern der die Welle bewegende Führungsschlitten ebenfalls hinsichtlich seiner vertikalen Einschiebebewegung exakt gesteuert werden kann.

Bei einer weiteren vorteilhaften Ausführungsform der erfindungsgemäßen Lösung weist die Greifeinrichtung zwei Greiferbacken auf, die eine Aufnahme des zu fixierenden Funktionselements in einer einzigen oder in einer beliebigen Drehwinkellage erlauben. Bei der Aufnahme in einer einzigen Drehwinkellage kann vorgesehen sein, dass die Greifeinrichtung zwei Greiferbacken besitzt, die eine zur Außenkontur des zu fixierenden Funktionselements komplementäre Innenkontur aufweisen. Sollen dabei einzelne Funktionselemente mit unterschiedlichen Drehwinkellagen auf den jeweiligen Wellen fixiert werden, so können die einzelnen Greiferbacken entsprechend ausgebildet sein.

Die vorliegende Erfindung beruht weiter auf dem allgemeinen Gedanken, ein Verfahren zum thermischen Fügen von jeweils eine Ausnehmung aufweisenden Funktionselementen, beispielsweise von Nocken, Ausgleichsmassen, Zahnrädern und/oder Lagern auf einer Welle mittels der zuvor genannten Vorrichtung zur Herstellung einer Steuerwelle anzugeben, bei dem zunächst die einzelnen Funktionselemente in die vertikal übereinander angeordneten Haltebalkone eingelegt und bezüglich ihrer Drehwinkellage ausgerichtet und fixiert werden. In diesem Stadium besitzen die einzelnen Funktionselemente jedoch bezüglich der x-Richtung und bezüglich der y-Richtung, d.h. also innerhalb einer horizontalen Ebene, noch zwei Freiheitsgrade, so dass sie zumindest geringfügig innerhalb der horizontalen Ebene verschoben werden können. Dies ermöglicht ein entsprechendes Ausweichen beim Einführen der Welle, wodurch ein bei bisher aus dem Stand der Technik bekannten Vorrichtungen äußerst exaktes Ausrichten, verbunden mit dem damit einhergehenden hohen konstruktiven Anforderungen, vermieden werden kann. Anschließend wird nun eine Zentrierstange von unten durch die Ausnehmung der einzelnen Funktionselemente geschoben, bis sie mit der Welle in Kontakt tritt. Eine Ausrichtung der Welle mittels der Zentrierstange kann beispielsweise über eine an der Zentrierstange angeordnete Zentrierspitze erfolgen, die in die Welle eingreift. Die Funktionselemente wurden bereits zuvor erwärmt oder werden nun in dem Haltebalkon erwärmt, wobei zusätzlich oder alternativ die Welle gekühlt werden kann. In diesem Stadium kann nun die Welle vertikal von oben mittels des verfahrbaren Führungsschlittens durch die Ausnehmungen der Funktionselemente eingeschoben werden, wobei nach dem Einschieben die jeweiligen Schubeinrichtungen die jeweils zugehörigen Greifeinrichtungen relativ zum jeweils zugehörigen Greiferschlitten zumindest in x-Richtung verschieben und in dieser Stellung ein die Führungselemente auf der Welle fixierender Temperaturausgleich abgewartet wird. Durch das Verschieben der Greifeinrichtungen durch die jeweils zugehörigen Schubeinrichtungen kann ein verbesserter Abkühlprozess bzw. thermischer Fügeprozess erreicht werden, da eine besonders gleichmäßige Abkühlung bzw. ein besonders gleichmäßiger Temperaturausgleich durch den Schiebevorgang erzwungen werden können. Nach dem die Führungselemente auf der Welle fixierenden Temperaturausgleich, kann die so gefügte Steuerwelle aus der Vorrichtung entnommen werden.

Mit der erfindungsgemäßen Vorrichtung kann ein Temperaturausgleichsprozess und damit ein thermischer Fügeprozess deutlich verbessert werden, wodurch die Qualität der derart hergestellten Steuerwellen deutlich gesteigert werden kann. Von besonderem Vorteil ist darüber hinaus, dass die einzelnen Funktionselemente während des Einschiebens der Welle durch deren Ausnehmungen jeweils einen Freiheitsgrad in x-Richtung und in y-Richtung aufweisen, wodurch der bislang stets erforderliche besonders exakte Ausrichtvorgang, um ein Verkanten der Welle verhindern zu können, umgangen bzw. vermieden werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: eine Detaildarstellung einer in Fig. 3 gezeigten, erfindungsgemäßen Vorrichtung im Bereich eines Haltebalkons,
- Fig. 2: eine erfindungsgemäße Vorrichtung mit einem Drehtisch für unterschiedliche Fertigungsstationen,
- Fig. 3: eine Schnittdarstellung durch die erfindungsgemäße Vorrichtung.

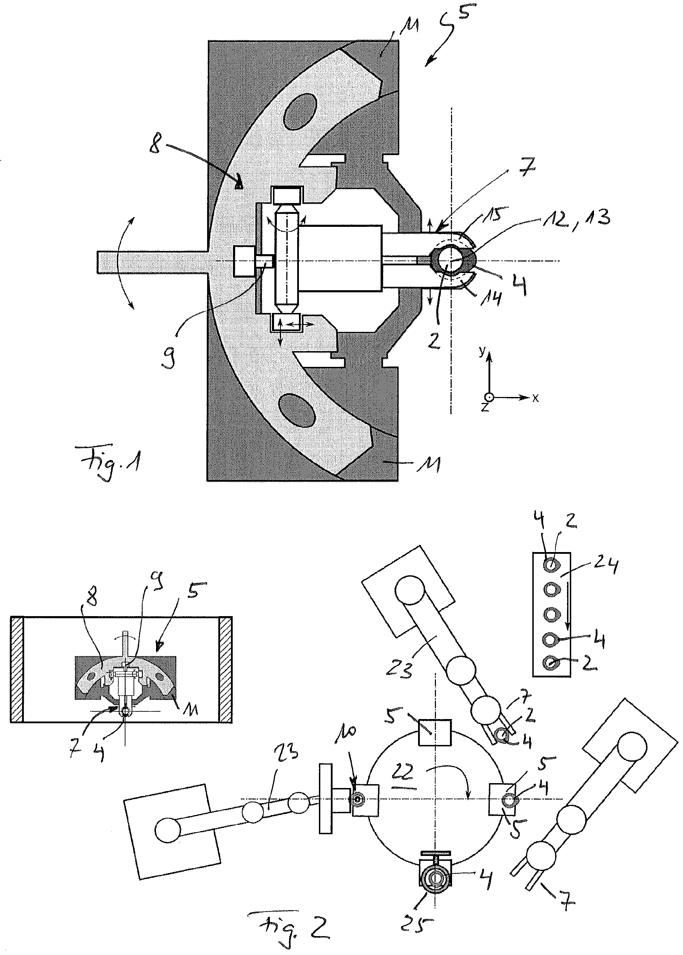

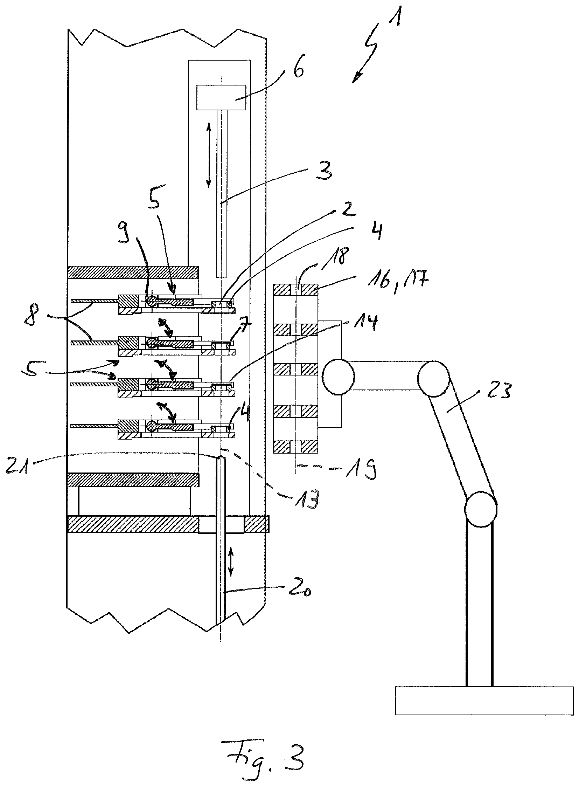

Entsprechend der Fig. 3, weist eine erfindungsgemäße Vorrichtung 1 zum Positionieren mehrerer, jeweils eine Ausnehmung 2 für eine Welle 3 aufweisender Funktionselemente 4, beispielsweise Nocken, Ausgleichsmassen, Zahnräder und/oder Lager, in einer vorbestimmten Winkelposition auf der Welle 3, mehrere für jeweils ein Funktionselement 4 bestimmte Haltebalkone 5 (vgl. auch Fig. 1) auf, die übereinander angeordnet sind, insbesondere vertikal übereinander. Ebenfalls vorgesehen ist ein verfahrbarer Führungsschlitten 6 für die Welle 3, so dass die Welle 3 insbesondere von oben durch die Ausnehmungen 2 der einzelnen Funktionselemente 4 einschiebbar ist. Das Einführen der Welle 3 von oben bietet dabei den großen Vorteil, dass sich die Welle 3 schwerkraftbedingt selbst ausrichtet.

Erfindungswesentlich bei der erfindungsgemäßen Vorrichtung 1 sind deren Haltebalkone 5, wovon einer vergrößert in Fig. 1 dargestellt ist und im Folgenden erläutert wird:
Zumindest ein Haltebalkon 5, vorzugsweise sämtliche Haltebalkone 5, weisen jeweils eine Greifeinrichtung 7 zum Fixieren jeweils eines Funktionselements 4, beispielsweise eines Nockens, auf. Die Greifeinrichtung 7 ist dabei an einem zugehörigen Greiferschlitten 8 angeordnet und zu diesem in x-Richtung und in y-Richtung (in der Bildebene in Fig. 1), d.h. in einer horizontalen Ebene, verstellbar gelagert. Über diese Lagerung ist es somit möglich, der Greifeinrichtung 7 und darüber auch den von dieser gegriffenen Funktionselemente 4 zwei Freiheitsgrade einzuräumen, nämlich in x-Richtung und in y-Richtung, wodurch ein Fügen der Welle 3 mit den Funktionselementen 4, d.h. ein Durchschieben der Welle 3 durch die Ausnehmungen 2 der Funktionselemente 4 einer deutlich geringeren Vorausrichtung der einzelnen Funktionselemente 4 bedarf, da diese ggf. kleinere Positionsabweichungen durch die beiden Freiheitsgrade ausgleichen können. Zusätzlich ist an dem in Fig. 1 gezeigten Haltebalkon 5 eine Schubeinrichtung 9 vorgesehen, die derart ausgebildet ist, dass sie die Greifeinrichtung 7 und über diese auch das Funktionselement 4 zumindest in x-Richtung relativ zum Greiferschlitten 8 verschieben kann. Genauer gesagt ist somit die Schubeinrichtung 9 am Greiferschlitten 8 angeordnet und wirkt auf die Greifeinrichtung 7 ein. Diese Schubeinrichtung 9 ermöglicht es, die einzelnen Funktionselemente 4 nach dem Auffädeln auf die Welle 3 zumindest in x-Richtung zu verschieben und dadurch einen gleichmäßigeren Abkühlvorgang zu erreichen.

Betrachtet man die Fig. 1 weiter, so kann man erkennen, dass die Greifeinrichtung 7 um eine y-Achse kippbar am Greiferschlitten 8 gelagert ist, was insbesondere das Entnehmen einer fertig gefügten Steuerwelle 10, beispielsweise einer Nockenwelle, aus der Vorrichtung 1 erleichtert. Die Steuerwelle 10 besteht dabei aus der Welle 3 und den darauf thermisch gefügten Funktionselementen 4.

Zumindest einer der Greiferschlitten 8, vorzugsweise sämtliche Greiferschlitten 8, sind dabei drehbar um eine z-Achse am zugehörigen Haltebalkon 5 gelagert, wobei die z-Achse eine Hochachse darstellt und in Fig. 1 senkrecht zur Bildebene steht. Die x-Achse und die y-Achse beschreiben dabei die Bildebene. Die z-Achse des zumindest einen Greiferschlitten 8 ist zur Achse des verfahrbaren Führungsschlitten 6 parallel ausgerichtet.

In dem Haltebalkon 5 ist eine kreissegmentartige Führungskontur 11 vorgesehen, wobei ein Kreismittelpunkt 12 der Führungskontur 11 in einer Achse 13 der Ausnehmung 2 des Funktionselementes 4 liegt, so dass ein Verfahren des Greiferschlittens 8 in der Führungskontur 11 ein Verdrehen des Funktionselements 4 um seine Achse 13 bewirkt, ohne dass dabei die Achse 13 der Ausnehmung 2 des Funktionselements 4 aus einer Fügeachse 13 (vgl. Fig. 3) herausgezogen wird. Das Verdrehen des Funktionselementes 4 erfolgt somit in der Fügeachse 13.

Die Schubeinrichtung 9 ist dabei üblicherweise derart ausgebildet, dass sich die Greifeinrichtung 7 ausschließlich in x-Richtung verschiebt und dadurch eine vordefinierte Andrücklage des Funktionselements 4 an die Welle 3 erzwingt, die ein besonders gleichmäßiges Abkühlen der Funktionselemente 4 und damit einen verbesserten thermischen Fügesitz erreichen kann.

Der Greiferschlitten 8 ist dabei relativ zum Haltebalkon 5 in z-Richtung, d.h. in Hochrichtung, fixiert, wobei zusätzlich auch die Greifeinrichtung 7 relativ zum Greiferschlitten 8 in z-Richtung fixiert ist.

Betrachtet man die Greifeinrichtung 7 genauer, so kann man erkennen, dass diese zwei Greiferbacken 14, 15 aufweist, die eine Aufnahme des zu fixierenden Funktionselements 4 in einer einzigen oder alternativ in einer beliebigen Drehwinkellage erlauben. Gemäß der ersten Alternative können die beiden Greiferbacken 14, 15 eine zur Außenkontur des zu fixierenden Funktionselements 4 komplementäre Innenkontur aufweisen und dadurch die Aufnahme in einer vordefinierten Drehwinkellage ermöglichen.

Generell erfolgt dabei das thermische Fügen von jeweils eine Ausnehmung 2 aufweisenden Funktionselementen 4, beispielsweise Nocken, Ausgleichsmassen, Zahnrädern und/oder Lagern, auf der Welle 3 mittels der gemäß der Fig. 3 dargestellten Vorrichtung 1 zur Herstellung der Steuerwelle 10 wie folgt:
Zunächst werden die einzelnen Funktionselemente 4 in die vertikal übereinander angeordneten Haltebalkone 5 eingelegt und gleichzeitig bezüglich ihrer Drehwinkellage ausgerichtet und fixiert. In diesem Stadium besitzen sie jedoch in der x-Richtung und in der y-Richtung noch jeweils einen Freiheitsgrad, d.h. sie sind in einer horizontalen Ebene verschieblich gehalten, da die Greifeinrichtung 7 beweglich am Greiferschlitten 8 gelagert ist. Anschließend wird eine Zentrierstange 20 von unten durch die einzelnen Ausnehmungen 2 der Funktionselemente 4 geschoben, bis sie mit der Welle 3 in Kontakt tritt. Hierbei kann sich insbesondere eine Zentrierspitze 21 der Zentrierstange 20 zumindest teilweise in die rohrförmige Welle 3 schieben. Die Funktionselemente 4 werden zum thermischen Fügen erwärmt, wobei zusätzlich oder alternativ die Welle 3 gekühlt werden kann. Nun wird die Welle 3 vertikal von oben mittels des verfahrbaren Führungsschlittens 6 durch die Ausnehmungen 2 der Funktionselemente 4 eingeschoben, bis eine Endlage erreicht ist. Ist diese Endlage, die auch die späteren Axialstellungen der einzelnen Funktionselemente 4 auf der Welle 3 definiert, erreicht, wird ein die Führungselemente (4) auf der Welle (3) fixierender Temperaturausgleich abgewartet und anschließend die Steuerwelle 10 entnommen.

Bei einer vorteilhaften Weiterbildung des erfindungsgemäßen Verfahrens verschieben die Schubeinrichtungen 9 die jeweiligen Greifeinrichtungen 7 und darüber auch die jeweiligen Funktionselemente 4 relativ zum zugehörigen Greiferschlitten 8 in x-Richtung. Hierdurch wird eine vordefinierte Anpresslage der Funktionselemente 4 an die Welle 3 erzwungen, wodurch ein besonders gleichmäßiger Temperaturausgleich und damit ein verbesserter thermischer Fügesitz erreicht werden können. Wie dabei insbesondere der Fig. 3 zu entnehmen ist, kann selbstverständlich im gleichen Arbeitsschritt, d.h. unmittelbar vor dem Einschieben der Welle 3, noch ein Lagerrahmen 16 oder ein Zylinderkopfhaube 17 mit entsprechenden Durchgangsöffnungen 18 derart über die Funktionselemente 4 geschoben werden, dass eine Achse 19 der Durchgangsöffnungen 18 mit der Achse 13 der Ausnehmungen 2 der Funktionselemente 4 fluchtet.

Die Zentrierstange 21 kann dabei die Funktionselemente 4 während dem Durchfahren in ihrer x-Richtung und der y-Richtung derart verschieben, dass die Achsen 13 der Ausnehmungen 2 der Funktionselemente 4 mit der Achse der Welle 3 fluchten. Alternativ ist auch denkbar, dass die Zentrierstange 21 kurz vor dem Einschieben der Welle 3 in die Ausnehmungen 2 der Funktionselemente 4, diese in ihrer x-Richtung und der y-Richtung derart verschiebt, dass die Achsen 13 der Ausnehmungen 2 der Funktionselemente 4 mit der Achse der Welle 3 fluchten.

Nach dem Einfahren der Welle 3 und vor dem Temperaturausgleich können die Schubeinrichtungen 9 die jeweiligen Greifeinrichtungen 7 relativ zum jeweils zugehörigen Greiferschlitten 8 zumindest in x-Richtung verschieben.

Die gemäß der Fig. 3 dargestellte Vorrichtung 1 kann selbstverständlich auch Bestandteil eines Vorrichtungsverbundes mit einem Drehtisch 22 (vgl. Fig. 2) sein, bei welchem zunächst mit einem Roboter 23 die einzelnen Funktionselemente 4 aus einem Magazin 24 entnommen und einem zugehörigen Haltebalkon 5 abgelegt werden. Dies kann von unterschiedlichen Robotern 23 bewerkstelligt werden, wobei selbstverständlich ein derartiger Roboter 23 auch in der Lage ist, mehrere oder sogar sämtliche Funktionselemente 4 auf einmal zu greifen. Anschließend wird der Drehtisch 22 verdreht und in einer weiteren Station die Funktionselemente 4 erwärmt, beispielsweise mittels Induktionsspulen 25. In der letzten Station (hier auf 9:00 Uhr) wird nun die Welle 3 gefügt und nach einem Temperaturausgleich die fertige Steuerwelle 10 aus der Vorrichtung 1 entnommen.

Mit der erfindungsgemäßen Vorrichtung 1 und dem erfindungsgemäßen Verfahren ist es möglich, einen bislang erforderlichen, extrem aufwendigen Ausricht- und Justiervorgang zum Eliminieren, da die einzelnen Funktionselemente 4 in der Vorrichtung 1 auf jeden Fall noch einen in einer horizontalen Ebene gelegenen Freiheitsgrad besitzen, über den zumindest gewisse Positionstoleranzen vergleichsweise einfach ausgeglichen werden können. Durch die erfindungsgemäß vorgesehenen Schubeinrichtungen 9 kann darüber hinaus eine eindeutige Lage zwischen den jeweiligen Funktionselementen 4 und der zugehörigen Welle 3 beim Abkühlen bzw. bei einem Temperaturausgleich erzwungen werden, wodurch ein hinsichtlich seiner Qualität deutlich verbesserter thermischer Fügesitz geschaffen werden kann.

## Patentansprüche

1. Vorrichtung (1) zum Positionieren mehrerer, jeweils eine Ausnehmung (2) für eine Welle (3) aufweisender Funktionselemente (4), insbesondere Nocken, Ausgleichsmassen, Zahnräder und/oder Lager, in einer vorbestimmten Winkelposition auf der Welle (3),
- wobei die Vorrichtung (1) mehrere für jeweils ein Funktionselement (4) bestimmte Haltebalkone (5) aufweist, die übereinander angeordnet sind,
- wobei ein verfahrbarer Führungsschlitten (6) für die Welle (3) vorgesehen ist, so dass die Welle (3) insbesondere von oben durch die Ausnehmungen (2) der Funktionselemente (4) einschiebbar ist,
- wobei die Haltebalkone (5) jeweils eine Greifeinrichtung (7) zum Fixieren jeweils eines Funktionselements (4) aufweisen
**dadurch gekennzeichnet,**
- **dass** zumindest eine Greifeinrichtung (7) an einem zugehörigen Greiferschlitten (8) angeordnet und in x-Richtung und in y-Richtung relativ zum zugehörigen Greiferschlitten (8) und damit zum Haltebalkon (5) verstellbar ist,
- **dass** zumindest ein Greiferschlitten (8) drehbar um eine z-Achse am Haltebalkon (5) gelagert ist.

2. Vorrichtung nach Anspruch 1,
**dadurch gekennzeichnet,**
**dass** die Greifeinrichtung (7) um eine y-Achse kippbar am Greiferschlitten (8) gelagert ist.

3. Vorrichtung nach Anspruch 1 oder 2,
**dadurch gekennzeichnet**
**dass** die z-Achse des zumindest einen Greiferschlitten (8) zur Achse des verfahrbaren Führungsschlitten (6) parallel ausgerichtet ist.

4. Vorrichtung nach Anspruch 1, 2 oder 3,
**dadurch gekennzeichnet,**
**dass** zumindest eine Schubeinrichtung (9) vorgesehen ist, die derart ausgebildet ist, dass sie die Greifeinrichtung (7) zumindest in x-Richtung relativ zum Greiferschlitten (8) und damit zum Haltebalkon (5) verstellen kann.

5. Vorrichtung nach einem der Ansprüche 1 bis 4,
**dadurch gekennzeichnet,**
**dass** in zumindest einem Haltebalkon (5) eine kreissegmentartige Führungskontur (11) vorgesehen ist, wobei ein Kreismittelpunkt (12) der Führungskontur (11) in einer Achse (13) der Ausnehmung (2) des Funktionselements (4) liegt, sodass ein Verfahren des Greiferschlittens (8) in der Führungskontur (11) ein Verdrehen des Funktionselements (4) um seine Achse (13) bewirkt.

6. Vorrichtung nach Anspruch 4 oder 5
**dadurch gekennzeichnet,**
**dass** die Schubeinrichtung (9) derart ausgebildet ist, dass sie die Greifeinrichtung (7) vorzugsweise ausschließlich in x-Richtung verschiebt.

7. Vorrichtung nach einem der vorherigen Ansprüche,
**dadurch gekennzeichnet,**
**dass** der Greiferschlitten (8) relativ zum Haltebalkon (5) in z-Richtung fixiert ist.

8. Vorrichtung nach einem der vorherigen Ansprüche,
**dadurch gekennzeichnet,**
**dass** die Greifeinrichtung (7) relativ zum Greiferschlitten (8) in z-Richtung fixiert ist.

9. Vorrichtung nach einem der vorherigen Ansprüche,
**dadurch gekennzeichnet,**
**dass** die Greifeinrichtung (7) zwei Greiferbacken (14,15) aufweist, die eine Aufnahme des zu fixierenden Funktionselements (4) in einer einzigen oder in einer beliebigen Drehwinkellage erlauben.

10. Vorrichtung nach Anspruch 9, erste Alternative,
**dadurch gekennzeichnet,**
**dass** die Greifeinrichtung (7) zwei Greiferbacken (14,15) aufweist, die eine zur Außenkontur des zu fixierenden Funktionselements (4) komplementäre Innenkontur aufweisen und dadurch die Aufnahme des zu fixierenden Funktionselements (4) in einer einzigen Drehwinkellage erlauben.

11. Verfahren zum thermischen Fügen von jeweils eine Ausnehmung (2) aufweisenden Funktionselementen (4), insbesondere Nocken, Ausgleichsmassen, Zahnrädern und/oder Lagern, auf einer Welle (3) mittels einer Vorrichtung (1) nach einem der Ansprüche 1 bis 10, zur Herstellung einer Steuerwelle (10), bei dem
- die Funktionselemente (4) erwärmt und/oder die Welle (3) gekühlt werden/wird,
- die Funktionselemente (4) in die vertikal übereinander angeordneten Haltebalkone (5) eingelegt und bezüglich ihrer Drehwinkellage ausgerichtet und fixiert werden, jedoch bezüglich der x-Richtung und der y-Richtung noch einen Freiheitsgrad besitzen,
- eine Zentrierstange (21) von unten durch die Ausnehmungen (2) der einzelnen Funktionselemente (4) geschoben wird, bis sie mit der Welle (3) in Kontakt tritt,
- die Welle (3) vertikal von oben mittels des verfahrbaren Führungsschlittens (6) durch die Ausnehmungen (2) der Funktionselemente (4) eingeschoben wird,
- ein die Führungselemente (4) auf der Welle (3) fixierender Temperaturausgleich abgewartet und danach die gefügte Steuerwelle (10) entnommen wird.

12. Verfahren nach Anspruch 11,
**dadurch gekennzeichnet,**
- **dass** die Zentrierstange (21) während dem Durchfahren die Funktionselemente (4) in ihrer x-Richtung und der y-Richtung derart verschiebt, dass die Achsen der Ausnehmungen (2) der Funktionselemente (4) mit der Achse der Welle (3) fluchten, oder
- **dass** die Zentrierstange (21) kurz vor dem Einschieben der Welle (3) in die Ausnehmungen (2) der Funktionselemente (4), die Funktionselemente (4) in ihrer x-Richtung und der y-Richtung derart verschiebt, dass die Achsen der Ausnehmungen (2) der Funktionselemente (4) mit der Achse der Welle (3) fluchten.

13. Verfahren nach Anspruch 11 oder 12,
**dadurch gekennzeichnet,**
**dass** nach dem Einfahren der Welle (3) und vor dem Temperaturausgleich die Schubeinrichtungen (9) die jeweiligen Greifeinrichtungen (7) relativ zum jeweils zugehörigen Greiferschlitten (8) zumindest in x-Richtung verschieben.

14. Verfahren nach einem der Ansprüche 11 bis 13.
**dadurch gekennzeichnet,**
**dass** vor dem Einfahren der Welle (3) eine Zylinderkopfhaube (17) oder ein geschlossener Lagerrahmen (16) derart positioniert wird, dass eine Achse (19) der Durchgangsöffnungen (18) mit einer Achse (13) der Ausnehmungen (2) der Funktionselemente (4) fluchtet.

## Claims

1. Device (1) for positioning several function elements (4), in particular cams, correction masses, gears and/or bearings, each having a recess (2) for a shaft (3), in a predetermined angular position on the shaft (3),
- wherein the device (1) comprises several support balconies (5) which are arranged one above the other, each being destined for a function element (4),
- wherein a movable guide carriage (6) for the shaft (3) is provided so that the shaft (3) can be pushed in particular from above through the recesses (2) of the function elements (4),
- wherein the support balconies (5) each comprise a gripping device (7) for respectively fixing a function element (4),
**characterised in that**
- at least one gripping device (7) is arranged on an associated gripper slide (8) and can be adjusted in x-direction and in y-direction relative to the associated gripper slide (8) and thus to the support balcony (5),
- at least one gripper slide (8) is mounted on the support balcony (5) so as to be rotatable about a z-axis.

2. Device according to claim 1,
**characterised in that**
the gripping device (7) is mounted on the gripper slide (8) so as to be tiltable about a y-axis.

3. Device according to claim 1 or 2,
**characterised in that**
the z-axis of the at least one gripper slide (8) is aligned parallel to the axis of the movable guide carriage (6).

4. Device according to claim 1, 2 or 3,
**characterised in that**
at least one pushing device (9) is provided which is configured so that it can adjust the gripping device (7) at least in x-direction relative to the gripper slide (8) and thus to the support balcony (5).

5. Device according to any of claims 1 to 4,
**characterised in that**
a circular segment-like guide contour (11) is provided in at least one support balcony (5), wherein a circle centre (12) of the guide contour (11) lies in an axis (13) of the recess (2) of the function element (4), so that moving the gripper slide (8) in the guide contour (11) causes the function element (4) to twist about its axis (13).

6. Device according to claim 4 or 5,
**characterised in that**
the pushing device (9) is configured to shift the gripping device (7) preferably exclusively in x-direction.

7. Device according to any of the preceding claims,
**characterised in that**
the gripper slide (8) is fixed relative to the support balcony (5) in z-direction.

8. Device according to any of the preceding claims,
**characterised in that**
the gripping device (7) is fixed relative to the gripper slide (8) in z-direction.

9. Device according to any of the preceding claims,
**characterised in that**
the gripping device (7) has two gripper jaws (14, 15) which make it possible to hold the function element (4) to be fixed in a single or a random rotary angle position.

10. Device according to claim 9, first alternative,
**characterised in that**
the gripping device (7) has two gripper jaws (14, 15) which have an inner contour complementary to the outer contour of the function element (4) to be fixed and thereby make it possible to hold the function element (4) to be fixed in a single rotary angle position.

11. Method for the thermal joining of function elements (4), in particular cams, correction masses, gears and/or bearings, each having a recess (2) on a shaft (3), by means of a device (1) according to any of claims 1 to 10, for the formation of a control shaft (10), in which
- the function elements (4) are warmed and/or the shaft (3) is cooled,
- the function elements (4) are inserted into the support balconies (5) arranged vertically above one another and are aligned and fixed relative to their rotary angle position, but still have a degree of freedom relative to the x-direction and the y-direction,
- a centring rod (21) is pushed from below through the recesses (2) of the individual function elements (4) until it comes into contact with the shaft (3),
- the shaft (3) is pushed in vertically from above by means of the movable guide carriage (6) through the recesses (2) of the function elements (4),
- a temperature equalisation fixing the guiding elements (4) on the shaft (3) is waited for and then the joined control shaft (10) is removed.

12. Method according to claim 11,
**characterised in that**
- the centring rod (21) when passing through pushes the function elements (4) in their x-direction and y-direction such that the axes of the recesses (2) of the function elements (4) are aligned with the axis of the shaft (3) or
- the centring rod (21) shortly before inserting the shaft (3) into the recesses (2) of the function elements (4) pushes the function elements (4) in their x-direction and y-direction such that the axes of the recesses (2) of the function elements (4) are aligned with the axis of the shaft (3).

13. Method according to claim 11 or 12,
**characterised in that**
after the introduction of the shaft (3) and before the temperature equalisation the push devices (9) shift the respective gripping devices (7) relative to the respectively associated gripper slide (8) at least in x-direction.

14. Method according to any of claims 11 to 13,
**characterised in that**
before the introduction of the shaft (3) a cylinder head hood (17) or a closed bearing frame (16) is positioned such that an axis (19) of the through openings (18) is aligned with an axis (13) of the recesses (2) of the function elements (4).

## Revendications

1. Dispositif (1) pour le positionnement de plusieurs éléments fonctionnels (4) présentant respectivement un évidement (2) pour un arbre (3), en particulier des cames, masses de compensation, roues dentées et/ou paliers, dans une position angulaire prédéterminée sur l'arbre (3),
- dans lequel le dispositif (1) présente plusieurs balcons de retenue (5) déterminés pour respectivement un élément fonctionnel (4) qui sont agencés l'un au-dessus de l'autre,
- dans lequel un chariot de guidage (6) mobile pour l'arbre (3) est prévu de sorte que l'arbre (3) puisse être inséré en particulier par le dessus par les évidements (2) des éléments fonctionnels (4),
- dans lequel les balcons de retenue (5) présentent respectivement un dispositif de préhension (7) pour la fixation respectivement d'un élément fonctionnel (4),
**caractérisé en ce**
- **qu'**au moins un dispositif de préhension (7) est agencé sur un chariot à pince (8) afférent et est réglable en direction x et en direction y par rapport au chariot à pince (8) afférent et ainsi au balcon de retenue (5),
- **qu'**au moins un chariot à pince (8) est logé de manière à pouvoir tourner autour d'un axe z sur le balcon de retenue (5).

2. Dispositif selon la revendication 1,
**caractérisé en ce que**
**que** le dispositif de préhension (7) est logé de manière rabattable autour d'un axe y sur le chariot à pince (8).

3. Dispositif selon la revendication 1 ou 2,
**caractérisé en ce**
**que** l'axe z d'au moins un chariot à pince (8) est orienté parallèlement à l'axe du chariot de guidage (6) déplaçable.

4. Dispositif selon la revendication 1, 2 ou 3,
**caractérisé en ce**
**qu'**au moins un dispositif de poussée (9) est prévu, lequel est réalisé de telle manière qu'il puisse régler le dispositif de préhension (7) au moins en direction x par rapport au chariot à pince (8) et ainsi au balcon de retenue (5).

5. Dispositif selon l'une quelconque des revendications 1 à 4,
**caractérisé en ce**
**qu'**un contour de guidage (11) de type segment circulaire est prévu dans au moins un balcon de retenue (5), dans lequel un point médian circulaire (12) du contour de guidage (11) se trouve dans un axe (13) de l'évidement (2) de l'élément fonctionnel (4) de sorte qu'un déplacement du chariot à pince (8) dans le contour de guidage (11) provoque une rotation de l'élément fonctionnel (4) autour de son axe (13).

6. Dispositif selon la revendication 4 ou 5,
**caractérisé en ce**
**que** le dispositif de poussée (9) est réalisé de telle manière qu'il pousse le dispositif de préhension (7) de préférence exclusivement en direction x.

7. Dispositif selon l'une quelconque des revendications précédentes,
**caractérisé en ce**
**que** le chariot à pince (8) est fixé par rapport au balcon de retenue (5) en direction z.

8. Dispositif selon l'une quelconque des revendications précédentes,
**caractérisé en ce**
**que** le dispositif de préhension (7) est fixé par rapport au chariot à pince (8) en direction z.

9. Dispositif selon l'une quelconque des revendications précédentes,
**caractérisé en ce**
**que** le dispositif de préhension (7) présente deux mâchoires de pince (14, 15) qui permettent un logement de l'élément fonctionnel (4) à fixer dans une seule ou dans une position angulaire rotative quelconque.

10. Dispositif selon la revendication 9, première alternative,
**caractérisé en ce**
**que** le dispositif de préhension (7) présente deux mâchoires de pince (14, 15) qui présentent un contour intérieur complémentaire au contour extérieur de l'élément fonctionnel (4) à fixer et permettent ainsi le logement de l'élément fonctionnel (4) à fixer dans une seule position angulaire rotative.

11. Procédé d'assemblage thermique d'éléments fonctionnels (4) présentant respectivement un évidement (2), en particulier des cames, masses de compensation, roues dentées et/ou paliers, sur un arbre (3) au moyen d'un dispositif (1) selon l'une quelconque des revendications 1 à 10, pour la fabrication d'un arbre de commande (10), pour lequel
- les éléments fonctionnels (4) sont chauffés et/ou l'arbre (3) est/sont refroidi(s),
- les éléments fonctionnels (4) sont insérés dans les balcons de retenue (5) agencés verticalement l'un au-dessus de l'autre et orientés et fixés par rapport à leur position angulaire rotative, toutefois possèdent par rapport à la direction x et la direction y encore un degré de liberté,
- une tige de centrage (21) est poussée par le dessous par les évidements (2) des seuls éléments fonctionnels (4) jusqu'à ce qu'elle entre en contact avec l'arbre (3),
- l'arbre (3) est enfoncé verticalement par le haut au moyen du chariot de guidage (6) mobile par les évidements (2) des éléments fonctionnels (4),
- une compensation de température fixant les éléments de guidage (4) sur l'arbre (3) est attendue et ensuite l'arbre de commande (10) assemblé est retiré.

12. Procédé selon la revendication 11,
**caractérisé en ce**
- **que** la tige de centrage (21) pousse pendant le passage les éléments fonctionnels (4) dans sa direction x et la direction y de telle manière que les axes des évidements (2) des éléments fonctionnels (4) s'alignent sur l'axe de l'arbre (3), ou
- **que** la tige de centrage (21) pousse juste avant l'enfoncement de l'arbre (3) dans les évidements (2) des éléments fonctionnels (4), pousse les éléments fonctionnels (4) dans leur direction x et la direction y de telle manière que les axes des évidements (2) des éléments fonctionnels (4) s'alignent sur l'axe de l'arbre (3).

13. Procédé selon la revendication 11 ou 12,
**caractérisé en ce**
**qu'**après l'entrée de l'arbre (3) et avant la compensation de température les dispositifs de poussée (9) poussent les dispositifs de préhension (7) respectifs par rapport au chariot à pince (8) respectivement afférent au moins dans la direction x.

14. Dispositif selon l'une quelconque des revendications 11 à 13,
**caractérisé en ce**
**qu'**avant l'entrée de l'arbre (3) un couvercle supérieure des soupapes (17) ou un cadre de palier (16) fermé est positionné de telle manière qu'un axe (19) des ouvertures débouchantes (18) s'aligne sur un axe (13) des évidements (2) des éléments fonctionnels (4).
